# EUROPEAN PATENT SPECIFICATION

(11) **EP 0 621 417 B1**
(45) Date of publication and mention of the grant of the patent: **03.03.1999**
(21) Application number: 93850134.3
(22) Date of filing: 15.06.1993
(51) Int. Cl.: F16F 9/46, F16F 5/00

(54) **Arrangement in a shock absorber**
Einrichtung in einem Stossdämpfer
Arrangement dans un amortisseur

(30) Priority: 23.04.1993 SE 9301366
(43) Date of publication of application: 26.10.1994
(73) Proprietor: ÖHLINS RACING AB, 194 27 Upplands Väsby (SE)
(72) Inventor: Danek, Magnus, S-116 34 Stockholm (SE)
(74) Representative: Karlsson, Berne

(56) References cited:
- DE-A- 3 932 287
- DE-A- 4 107 402
- DE-C- 4 022 099
- FR-A- 2 286 981
- GB-A- 671 925
- GB-A- 1 535 583
- US-A- 2 777 544
- US-A- 2 861 794
- US-A- 3 647 199
- US-A- 4 034 860
- US-A- 4 561 641
- US-A- 4 741 516
- US-A- 5 152 547

## Description

### TECHNICAL FIELD

The present invention relates to an arrangement for actively using in a shock absorber a hysteresis function, which occurs due to the compressibility in the working medium of the shock absorber, as parameter or factor for determining the variation of the damping force of the shock absorber during compression and/or expansion movement(s) in the working medium, carried out by the piston of the shock absorber relative to the cylinder of the shock absorber. The said hysteresis function provides different damping forces, considering the same relative speed between piston and cylinder, depending on whether the speed is increasing or decreasing.

### PRIOR ART

A hysteresis function due to the compressibility of the working medium has already been known in connection with shock absorbers. The existence of the hysteresis function per se has been noted in known equipment, where it made up a component which placed a load on design of structures and functions in the environment of the shock absorber.

### DESCRIPTION OF THE INVENTION

### TECHNICAL PROBLEM

In connection with the said structures, the hysteresis function has been experienced as a troublesome and, in certain connections, critical factor. In a special shock absorber which works with short strokes, it is found that a large part of the stroke can be attributed to a suspension movement attributable to the compressibility of the working medium even though the working medium is considered to be of the low-compressibility type and normally consists of or comprises, for example, hydraulic oil. This suspension movement is uncontrolled and results in different negative effects in the shock absorber function at the different relative speeds between piston and cylinder. The control and adjustment function of the shock absorber in its entirety becomes inaccurate and, even if the adjustable or controllable parts of the shock absorber are adjusted or controlled with great accuracy, the total adjustment or control result becomes deficient. The arrangement according to the present invention has the object of solving this problem, among others.

There is also a requirement to be able to realise a greater freedom of action with respect to the design of shock absorbers. The said unwanted suspension and hysteresis function have been limiting factors in this. The invention also solves this problem.

There is also a requirement to be able to produce shock absorbers with short strokes and with great accuracy in the adjustment and control functions, for example in cars of the INDYCAR type. The invention also solves this problem. There is also a requirement for being able to transfer the effective damping capability of the shock absorber from one part to another part of the respective compression and expansion movement so that, for example, a high damping force can be maintained or obtained at the end of the respective movement. The invention also solves this problem.

In accordance with the concept of the invention, the effect on the compressibility of the medium and/or the volume of the medium will be selected or controlled (manually or electrically) by adjustment or, respectively, control function. There is also a problem of obtaining reliable and simple functions for the said changeability. The invention also solves this problem.

In one embodiment, a function changing the volume of the working medium is utilised so that the spring length and hysteresis function of the working medium can be changed/varied. The invention solves this problem by means of an appropriate structural design and function.

In a further embodiment, a function is utilised, singly or supplemented by the said volume-changing function, which changes the effect from the compression. The invention also solves this problem and provides instructions about a construction and function which operate well structurally and functionally.

In certain cases, it is also desirable for it to be possible to provide the damping forces of the shock absorber with different values during the expansion and respectively compression movements of the shock absorber so that different slopes of the rising part of the damping force curve can be obtained. The redistribution function provides the possibility for adaptation to different track and terrain characteristics.

In some driving situations, the hitherto known shock absorbers behave as if they are losing their shock absorbing capacity at the start of a shock absorber variation. The invention solves this problem and can produce a direct shock absorber response in the said case.

In the said proposed embodiments, a non-return valve arrangement is included and it can then be desirable to avoid a large flow of medium flowing through the respective non-return valve effected. The invention can also solve this problem.

### SOLUTION

The arrangement according to the present invention undertakes, among other things, to solve the above problems and is based on the concept that it will be possible to utilise the hysteresis function as an active parameter or factor in that it is made variable and is utilised for determining and distributing the damping forces or damping energy during the respective relative movement between piston and cylinder.

The arrangement according to the invention is defined by the features of claim 1.

That which, more concretely, can be considered to be characteristic of the novel arrangement is that means are arranged to influence the effect from the compressibility of the medium and/or volume (working volume) of the medium and thereby the said hysteresis function. The invention is also characterised in that one or more adjustments or controls of the hysteresis function carried out on or by the said means cause directed or controlled changes of the damping forces with increasing and decreasing speed at the said respective speed considered, thereby producing a change in the damping force variation which influences the changing effect of the damping force during the respective compression and/or expansion movement.

In further developments of the concept of the invention it is proposed that the said means will comprise an arrangement which exhibits two valves, preferably control valves, by means of which two-position adjustment of the magnitude and shape of the hysteresis is produced. In a first influencing position for determining a first magnitude and shape of the hysteresis, the function of the first valve is connected and the function of the second valve is disconnected. In a second influencing position, conversely, the function of the second valve is connected and the function of the first valve is disconnected. In the first case, the shock absorber will work with a large piston area (first piston area), low pressure (first pressure) and small volume (first volume) which provides a small suspension/hysteresis function. In the last-mentioned case, a small piston area (a second piston area), higher pressure (second pressure) and larger volume (second volume) are produced by the connection of the valve, which provides a larger suspension/hysteresis function. Said second piston area, second pressure and second volume specified within brackets are lower than the first piston area, larger than the first pressure and, respectively, larger than the first volume. Alternatively, both said valves can be connected at the same time which provides a steep slope in the force/speed diagram in the zero area. This makes it possible to obtain a fast build-up of force in the zero area and the shock absorber can provide a large damping force even at the end of decreasing speed.

In a supplementary or separately operating embodiment, the control or adjustment can cause a change of the effect from the pressure in one or more media volumes of the working medium in order to change the suspension capability. In an embodiment, the said volume change is arranged in such a manner that it occurs following or close to the zero force area of the shock absorber (at the start of the damping force curve). Further characteristics can be obtained from the patent claims and description.

### ADVANTAGES

By that which has been proposed above, an increased freedom of choice is obtained for selecting the magnitude of the shock absorber forces at the different speeds considered between the piston and the cylinder in relation to whether the speeds are increasing or decreasing. The hysteresis function receives different shapes and provides different shock absorber forces/slopes in the damping force curve at the different speeds between piston and cylinder depending on whether the speed of movement is increasing or decreasing. This provides increased possibilities to adapt or determine the damping forces of the shock absorber at every speed during the expansion and compression movements of the shock absorber and thereby to make possible an accurate adaptation of the shock absorber to different track and terrain characteristics and different types of traffic characteristics.

### DESCRIPTION OF THE FIGURES

In the text below, an embodiment proposed here of an arrangement which exhibits the characterising features significant to the invention will be described whilst, at the same time, referring to the attached drawings, in which
Figure 1 shows diagrammatically a design example of a shock absorber with volume- and pressure-changing elements for the working medium and a valve arrangement for the same,
Figure 2 shows in a basic diagram parts of the arrangement according to Figure 1,
Figure 3 diagrammatically shows different curves of a hysteresis for working media according to Figure 1,
Figure 4 diagrammatically shows the energy distribution during a working cycle of the shock absorber,
Figures 5 - 5b diagrammatically show force/position distribution curves of the present shock absorber.

### DETAILED EMBODIMENT

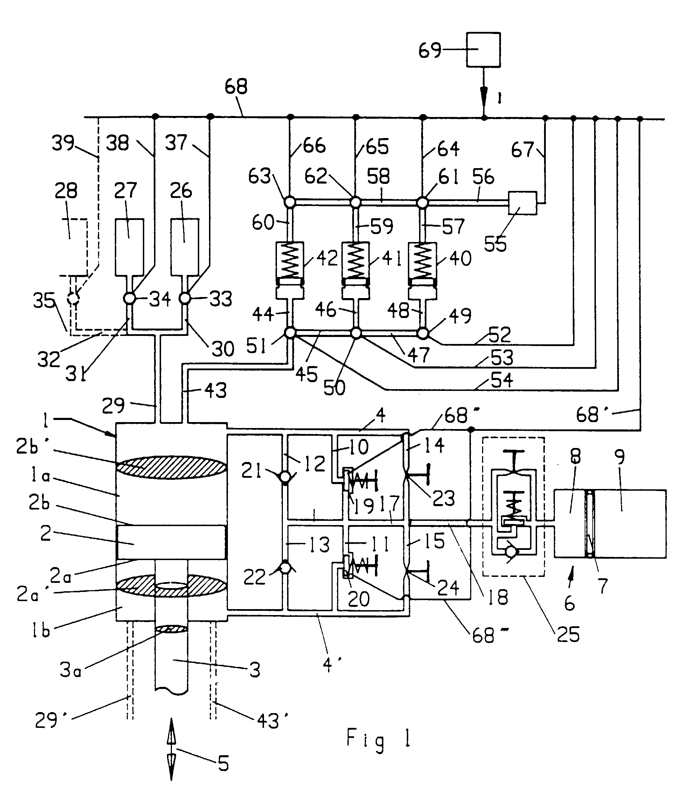

The shock absorber according to Figure 1 is constructed with a cylinder part 1 and a piston 2 with piston rod 3. The space of the cylinder part above and respectively below the piston is represented by 1a and, respectively 1b. The piston operates in a known manner in a working medium, for example consisting of or comprising hydraulic oil and any additives. This type of shock absorber can be made up of a construction known per se and operate with a function known per se. Reference is made, for example, to the shock absorber according to Swedish Patent Application 9203706-8 by the same applicant and inventor.

The working medium in the space moves due to the piston movements relative to the cylinder from the first space 1a to the second space 1b and vice versa via ducts extending outside the cylinder, whereby a first duct 4 is allocated to the compression movement of the piston and a second duct 4 is allocated to the expansion or return movement of the piston. The movements of the piston relative to the cylinder are specified by arrows 5. The system also includes an accumulator (spring) unit 6 for the working medium, which accumulator receives media during the compression movements and delivers media during the expansion movements as below. The accumulator can be made up of a known gas accumulator with moving piston 7, on one side 8 of which the working medium acts and on the other side 9 of which a gas spring acts.

The said ducts 4 and 4' and accumulator 6 can be connected to one another via further duct parts and valve arrangements. Thus, duct parts 10, 11, 12, 13, 14, 15, 16, 17 and 18 are included. Two adjustable and/or controllable control valve arrangements 19 and 20, respectively, which are sensitive to pressure in the working medium, are arranged in duct parts 10 and 11. The duct parts 12, 13 include one-way flow arrangements 21, 22 and the duct parts 14, 15 include adjustable bleed valve arrangements 23, 24. The duct parts 16 and 17 combine the inner parts of the duct parts 10, 11; 12, 13 and 14, 15 with one another and with the duct part 18. At the connection of the duct part 18 to the accumulator 6, an adjustable and/or controllable control valve arrangement 25 is included. With respect to functions and adjustability of the valve arrangements 19, 20 and 23, 24, reference is made to the text below and to the said Swedish patent application.

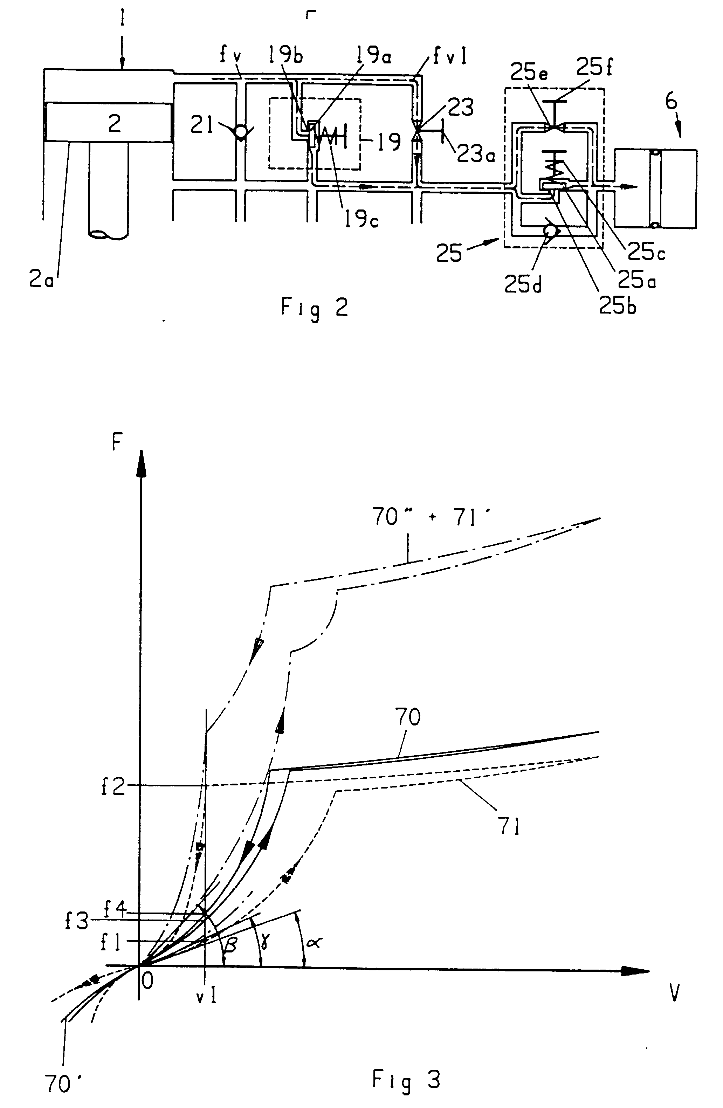

Figure 2 shows the principles of operation of the control valves 19 and 25. A flow path direction through the valve 19 is shown by fv. The valve 19 is arranged to allow flow in the direction fv but not in a direction which is opposite to this direction. The control element 19 exhibits a valve part 19a which rests against a seat 19b with a force which is produced with the aid of a spring and/or electromagnet, or equivalent. The force of the flow in the direction fv must thus overcome the said bearing force. In the opposite direction, the force of the flow conversely reinforces the closing force so that no flow can pass. A spring force is symbolised by 19c. The control valve 25 has a corresponding construction with a valve part 25a, seat part 25b and spring 25c. The flow can thus pass through valve 25 in the direction fv but not in the opposite direction. In the valve arrangement 25, a one-way flow direction valve (non-return valve) 25d and an adjustable bleed valve 25e are also included, the adjusting element of which is specified by 25f.

The bleed valve 23 can be adjusted in the same way by means of an adjusting element (wheel) 23a. With compression movements of the piston 2 relative to the cylinder 3, a first flow path is thus set up via the valve 19 and a second flow path fv1 via the valve 23. The accumulator receives media displaced by the piston rod via the said valve 25. The remaining media which are displaced by the piston during the compression movement are conducted to the underside 2a of the piston via the non-return valve 22 (see Figure 1) and the bleed path via the valve 24.

With an expansion movement following the compression movement, received media displaced by means of the piston rod are fed back to the accumulator 6 via the non-return valve 25d in the valve arrangement 25 and the non-return valve 21. The said valve arrangement is included in a half, which is symmetrical at least essentially from the point of view of operation, together with the valves 20, 22 and 24 which, respectively, are constructed correspondingly to the valves 19, 21 and 23. During the expansion, the valves 20 and 24 allow through media which are displaced from the underside 2a of the piston to the topside 2b via the non-return valve 21 (via which the feeding from the accumulator also occurs at the same time). According to the above, the valve 19 is thus closed during the expansion movement in the same way as the valve 20 is closed during the compression movement.

According to the concept of the invention, the control valve function 25a, 25b, 25c can be connected or disconnected at the same time as the valve 19 is disconnected or, respectively, connected, that is to say one of the valves is connected at a time. With a disconnected control valve function 25a, 25b, 25c, there is a low pressure in the duct part 18. In the disconnected position, the media flow passes freely in both directions through the valve 25a, 25b, 25c to and from the accumulator. This has the effect that the system operates with the complete area 2b' of the piston, which is here called large area, low pressure in the system and a small volume utilised. A first (small) suspension/hysteresis function is thus obtained in the medium.

In a connected second position of the control valve 25a, 25b, 25c and disconnected position of the valve 19, the pressure in the system is increased above the first-mentioned pressure. In the said disconnected position of the valve 19, media can flow through the valve 19 in both directions. A small piston area (= piston area 3a = 2b' - 2a') and greater volume (compare with first-mentioned case) is utilised in the system and a larger suspension/hysteresis function (compared with the first-mentioned case) is thereby obtained. In an alternative embodiment, both valves 19, 25 are connected at the same time.

According to the concept of the invention, an arrangement or element for changing the volume and/or effect from the pressure of the medium can be included in one embodiment in the shock absorber arrangement. These volume-changing elements are specified by 26, 27 and 28 and can be one or more in number. Connection of the respective volume-changing element is carried out via lines or ducts 29, 30, 31, 32. The volume-changing elements are made up in one embodiment of connectable and disconnectable containers or spaces. Connection of a respective space 26, 27, 28 to the cylinder space, for example space 1a, is carried out by means of adjusting or controlling elements (valve elements) 33, 34, 35. Controlling or adjusting is carried out electrically (for example on-off principle) via lines which are symbolised by 37, 38, 39. Connection of the space 26 and media included therein thus entails a changed first working media volume, connection of the spaces 27 and 28 correspondingly entails second and, respectively, third working volumes. Connection of two spaces at the same time entails a fourth volume, and so forth. A container can per se effect a number of different volumes with the aid of part spaces, and so forth.

Alternatively or additionally, the space 1c can be connected to the elements 40, 41 and 42 changing the effect from the compressibility of the working medium, which can be one or more in number. The connection to the space 1a (and/or space 1b) of elements 40, 42 is carried out via lines 43, 44, 45, 46, 47, 48 and controlling or adjusting (for example by the on-off principle) is carried out by means of connecting elements (valves) 49, 50, 51 which are arranged to be actuatable by means of electrical control or manual control. Electrical conductors are shown by 52, 53 and, respectively, 54. The elements changing the effect of compressibility can be charged from a pressure source 55 and lines 56, 57, 58, 59, 60. The charging is carried out via valves 61, 62, 63 which are controlled by electrical conductors 64, 65, 66. The source 55 is controlled via electrical conductor 67. A control line or bus arrangement 68 can be utilised and control can be effected, for example, from an internal processor unit 69 placed inside the shock absorber or outside of the latter. The said valve and control arrangement can be constructed in a known manner. The elements changing volume and/or pressure can be connected to the space 1a and/or 1b in the cylinder part. Connection of the element 40 can produce a first changed compressibility. Connection of the element 41 can give a second compressibility, and so forth (compare with the arrangement of elements 26, 27, 28). The respective valve arrangement 19, 20 and 25 can also be controlled via conductors 68', 68'' and, respectively 68''' from the processor.

By actuation or programming of the control unit 69, it can be brought to produce a control function i of the respective element changing volume and/or pressure. The electrical arrangement is shown in simplified form and individual control i of the respective changing element can be carried out in a known manner. The control function of the arrangements 19, 20 and 25 can also be effected from 69 in a manner not specially specified. Alternatively, the control or adjustment functions can be manual.

Due to the arrangements, the volume of the working medium and/or the effect from the compressibility can be changed and deliberately adjusted or controlled in a desired manner. The working medium thereby exhibits different "spring lengths" which are actively utilised in the present invention.

Thus, the hysteresis function in the working medium in the spaces 1a and 1b and duct parts specified can be effected and utilised advantageously in the overall shock absorber arrangement. For example, it is normally difficult to obtain a required desirable high damping energy over the complete compression or expansion movement of the piston which now becomes possible through the invention.

Figure 3 shows that with a considered speed v1 of the piston relative to the cylinder, shock absorber forces f1, f2 and, respectively, f3, f4 occur which have different magnitudes with increasing and respectively decreasing speed. The difference in the said forces f1, f2 and, respectively f3, f4 can be changed or redistributed in a manner which is advantageous for driving characteristic and/or terrain. A first hysteresis function is specified by the solid line 70 and a second hysteresis function is shown by the dashed line 71. The extension of the said lines can be changed according to the invention. Thus, for example, the variations in damping force can be made to follow an alternative curve part 71a in the second hysteresis function. The extension of the curve parts of the hysteresis functions can be optionally composed within a wide range by utilising the volume- and/or pressure-changing elements described. Thus, for example, the slope of the curve with respect to the origin can be changed. In Figure 3, three different slopes have been specified by alpha, beta and gamma. The slope determines the travelling comfort or softness in damping with an impact against projecting features in the roadway. The first curve 70 can be related to the case where only the valve 19 is connected (the valve 25 is deactivated). The curves shown in the coordinate system can be related to the compression movement (top right square in the coordinate system). The curve 70 for the expansion movement (lower left square) is produced by valve 20 and is partly shown and specified by 70', which last-mentioned curve has a shape corresponding to the curve 70. The second curve 71 can be related to the case where valve 25 is activated (connected) and valve 19 is disconnected. The hysteresis form 71, however, is only obtained during the compression movement. During the expansion movement, it takes up a form corresponding to the curve 70' (see non-return valve 25d in Figure 2) by the valve becoming bypassed (by 25d). When valves 19 and 25 are connected at the same time, the curve or form 70'' + 71' is obtained which is characterised by a steep slope in the zero area (= strong build-up of damping force) with increasing lower speed and retention of a high damping force with decreasing speed.

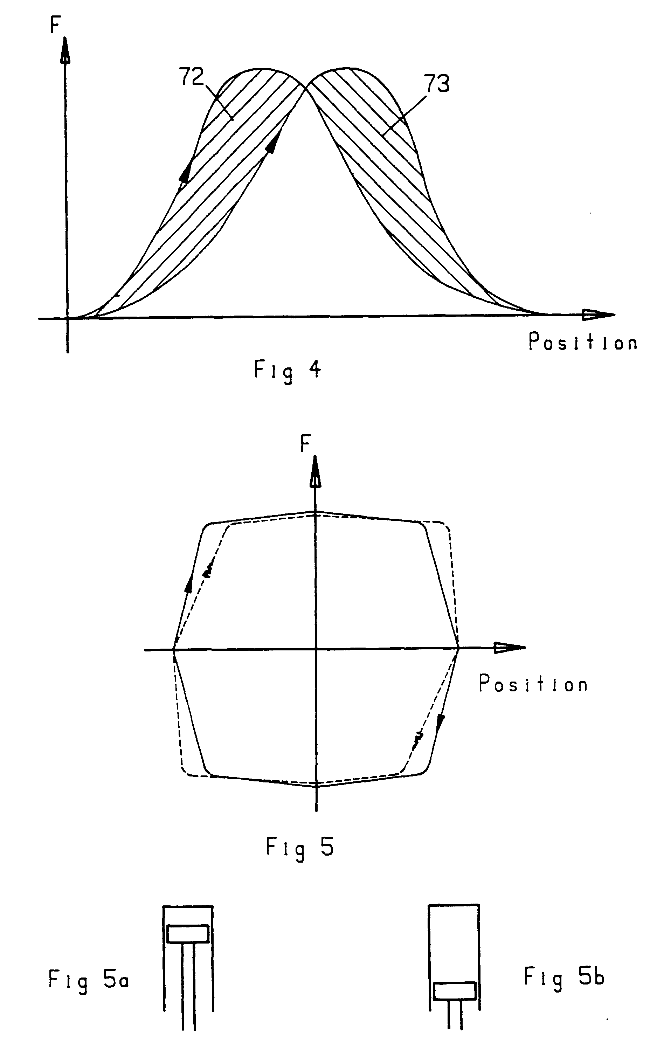

Figure 4 is intended to show how the shock absorber energy produced by the shock absorber can be distributed between areas 72 and 73 from one part of the compression or expansion movement to another part, for example in such a manner that the damping energy is shifted from the initial parts of the movement to its end parts. The horizontal axis shows the length of movement.

Figure 5 shows damping force variations in dependence on the relative positions between piston and cylinder. The left squares are attributable to the compression movement (compare Figure 5a) and the right squares are attributable to the expansion movement (compare Figure 5b). The maximum speed between piston and cylinder is shown by MH. Figure 5 specifies two different curves which essentially coincide. The curves differ at the corners of the diagram where a solid curve is specified by 74 and a dashed curve by 75. The curves illustrate how the damping force capability can be maintained for a long way out into the end positions of the compression and expansion movements due to the invention, see curve 75. The curve 74 shows how the damping capability normally decreases at the said end positions.

In principle, the arrangement arranged via connections 29 and 43 at the space 1a of the piston can be replaced or supplemented by a corresponding arrangement which is connected to lines 29' and 43'.

The working volume mentioned above is meant to be the part of the media volume which is pressurised during the compression and/or expansion movement in order to provide the desired damping force.

According to the above, it can also be seen that changes in the suspension volumes of the medium involve changes of the spring/spring lengths of the piston/piston rod.

The invention is not limited to the above embodiments shown by way of example but can be subjected to modifications within the scope of the subsequent claims and concept of the invention.

## Claims

1. Arrangement for actively using in a shock absorber a hysteresis function, occurring due to the compressibility in preferably low-compressive working media of the shock absorber, as a parameter or factor for determining the damping force variation of the shock absorber during respective compression and/or expansion movement(s) in the working medium carried out by the piston (2) of the shock absorber relative to the cylinder (1) of the shock absorber, whereby the hysteresis function, considering the same relative speed between piston and cylinder, provides different damping forces depending on whether the speed is increasing or decreasing, characterised in that means are arranged to influence the effect from the compressibility of the medium and/or the volume (working volume) of the medium, and thereby the said hysteresis function, and in that one or more adjustments/change-overs or controls of the hysteresis function, carried out on or by the said means, cause directed or controlled changes of the damping forces with increasing and decreasing speed at the said respective speed considered, thereby producing a change in the damping force variations which results in a damping-force-changing, for example damping-force-moving effect during the respective compression and/or expansion movement.

2. Arrangement according to Claim 1, characterised in that it exhibits a two-position adjustment of the magnitude and shape of the hysteresis, produced by means of two valves (19, 20 and, respectively 25), preferably control valves, whereby in a first influencing position for determining a first magnitude and shape of the hysteresis, the function of the first valve (19, 20) is connected and the function of the second valve (25) is disconnected and, in a second influencing position, the function of the second valve is connected and the function of the first valve is disconnected, where by the shock absorber operates in the first-mentioned case with a large piston area, low pressure and small (compressed) working volume which gives a small suspension/hysteresis function (70), and in the last-mentioned case the shock absorber operates with a small piston area, higher pressure and larger working volume which gives a greater suspension/hysteresis function (71), and/or that directed or controlled variations in the volume of the working medium and pressurisation bring about different desired springs/spring lengths of the piston/piston rod and are utilised for producing different hysteresis magnitudes and hysteresis shapes.

3. Arrangement according to Claim 1 or 2, characterised in that the volume and/or effect of compressibility of the medium is/are selectable so that a desired slope from and directly after the zero area is present in the damping force curve obtained.

4. Arrangement according to Claim 1 or 2, characterised in that the said means comprise one or more elements (26, 27, 28) increasing or decreasing the volume of the medium with the aim of changing the spring length/spring lengths of the medium, and that adjustment or control (i) causes connection or disconnection of one or more spaces (26, 27, 28 and, respectively 41, 42, 43) to or, respectively, from the normal working space (1a and/or 1b) of the piston in the cylinder (1), of which connectable and disconnectable spaces first spaces (26, 27, 28) can be used for fine adjustment and second spaces (41, 42, 43) can be used for coarse adjustment of the hysteresis.

5. Arrangement according to any of the preceding claims, characterised in that adjustment or control causes a change in the elasticity in one or more media spaces (1a, 1b, 26, 27, 28 and, respectively, 41, 42, 43).

6. Arrangement according to any of the preceding claims, characterised in that simultaneous connection of two valves, preferably the said control valves (19, 20 and, respectively, 25) results in a third magnitude and shape of the hysteresis which gives a high force build-up in the zero area of the shock absorber movement and retains a high damping capability at decreasing speed.

7. Arrangement according to any of the preceding claims, characterised in that the volume change is arranged to occur following or directly outside the zero force area of the shock absorber.

8. Arrangement according to any of the preceding claims, characterised in that shifting the working medium between the top and undersides (1a and, respectively, 1b) of the piston is arranged to take place essentially outside the cylinder via a duct-part and adjustment and/or control arrangement.

9. Arrangement according to any of the preceding claims, characterised in that the duct part and adjustment and/or control arrangement consists of two at least essentially functionally symmetrical parts which are allocated to the compression and, respectively, expansion movement of the shock absorber, and via which arrangement an accumulator is connected to the working space of the cylinder in such a manner that on the respective compression movement, the accumulator receives displaced media and on the respective expansion stroke feeds back the received displaced media.

10. Arrangement according to any of Claims 1 - 8, characterised in that the duct part and adjustment and/or control arrangement comprises four, for example parallel ducts, of which two first ducts are allocated to the compression movement and two second ducts are allocated to the expansion movement, in addition to which one duct in a respective pair includes control valves and one duct in a respective pair includes bleed valves and one-way-flow arrangements, and that an accumulator arrangement is connected to one or more of the duct parts.

## Patentansprüche

1. Anordnung zur aktiven Nutzung einer Hysteresefunktion, die aufgrund der Komprimierbarkeit von vorzugsweise gering-komprimierbaren Arbeitsmedien eines Stoßdämpfers auftritt, in einem Stoßdämpfer als ein Parameter oder Faktor zur Bestimmung der Dämpfungskraftschwankungen des Stoßdämpfers während der Kompressions- bzw. Expansionsbewegung(en) im Arbeitsmedium, die der Kolben (2) des Stoßdämpfers bezogen auf den Zylinder (1) des Stoßdämpfers ausführt, durch welche die Hysteresefunktion bei gleicher relativer Geschwindigkeit zwischen Kolben und Zylinder in Abhängigkeit davon, ob die Geschwindigkeit zu- oder abnimmt, unterschiedliche Dämpfungskräfte bewirkt, gekennzeichnet durch das Vorhandensein von Mitteln, um den aus der Komprimierbarkeit des Mediums und/oder dem Volumen (Arbeitsvolumen) des Mediums herrührenden Effekt und damit besagte Hysteresefunktion zu beeinflussen, sowie dadurch, daß eine oder mehrere, von besagten Mitteln ausgeführte Einstellungen/Umstellungen oder Steuerungen der Hysteresefunktion gezielte oder gesteuerte Veränderungen der Dämpfungskräfte für zu- und abnehmende Geschwindigkeit bei besagter jeweils betrachteter Geschwindigkeit bewirken, wodurch sie eine Veränderung in den Dämpfungskraftschwankungen bewirken, was einen dämpfungskraftverändemden, z. B. dämpfungskraftbewegenden, Effekt während der Kompressions- bzw. Expansionsbewegung zur Folge hat.

2. Anordnung nach Anspruch 1, dadurch gekennzeichnet, daß sie eine Zwei-Positionen-Einstellung der Größenordnung und Gestalt der Hysterese aufweist, bewirkt durch zwei Ventile (19, 20 bzw. 25), vorzugsweise Steuerventile, wodurch in einer ersten Beeinflussungsposition zur Bestimmung einer ersten Größenordnung und Gestalt der Hysterese die Funktion des ersten Ventils (19, 20) angeschlossen ist und die Funktion des zweiten Ventils (25) nicht angeschlossen ist und in einer zweiten Beeinflussungsposition die Funktion des zweiten Ventils angeschlossen ist und die Funktion des ersten Ventils nicht angeschlossen ist, wodurch der Stoßdämpfer im erstgenannten Fall mit einer großen Kolbenfläche, niedrigem Druck und kleinem (komprimierten) Arbeitsvolumen arbeitet, woraus sich eine geringe bzw. kleine Verzögerung/Hysteresefunktion (70) ergibt, und im letztgenannten Fall mit einer kleinen Kolbenfläche, höherem Druck und größerem Arbeitsvolumen arbeitet, was eine größere Verzögerung/Hysteresefunktion (71) ergibt, und/oder daß gezielte oder gesteuerte Veränderungen des Volumens des Arbeitsmediums und der Unter-Druck-Setzung unterschiedliche gewünschte Federungen/Federungswege des Kolbens bzw. der Kolbenstange mit sich bringen und für die Erzeugung unterschiedlicher Größenordnungen und Gestalten der Hysterese genutzt werden.

3. Anordnung nach Anspruch 1 oder 2, dadurch gekennzeichnet, daß das Volumen und/oder der Effekt der Komprimierbarkeit des Mediums wählbar ist/sind, so daß in der erhaltenen Dämpfungskraftkurve eine gewünschte Neigung ab und unmittelbar nach dem Nullbereich vorhanden ist.

4. Anordnung nach Anspruch 1 oder 2, dadurch gekennzeichnet, daß besagte Mittel ein oder mehrere Elemente (26, 27, 28) umfassen, die das Volumen des Mediums mit dem Ziel der Veränderung des Federungsweges bzw. der Federungswege des Mediums vergrößern bzw. verringern, und die Einstellung oder Steuerung (i) den Anschluß oder die Abtrennung eines Raumes oder mehrerer Räume (26, 27, 28 bzw. 41, 42, 43) an den bzw. vom normalen Arbeitsraum (1a und/oder 1b) des Kolbens im Zylinder (1) bewirkt, wobei die ersten Räume (26, 27, 28) der anschließbaren und abtrennbaren Räume für die Feineinstellung und die zweiten Räume (41, 42, 43) für die Grobeinstellung der Hysterese genutzt werden können.

5. Anordnung nach einem der vorhergehenden Ansprüche, dadurch gekennzeichnet, daß die Einstellung oder Steuerung eine Veränderung der Elastizität in einem oder mehreren der Medienräume (1a, 1b, 26, 27, 28 bzw. 41, 42, 43) bewirkt.

6. Anordnung nach einem der vorhergehenden Ansprüche, dadurch gekennzeichnet, daß der gleichzeitige Anschluß zweier Ventile, vorzugsweise besagter Steuerventile (19, 20 bzw. 25) eine dritte Größenordnung und Gestalt der Hysterese zur Folge hat, die einen großen Kraftaufbau im Nullbereich der Bewegung des Stoßdämpfers ergibt und bei abnehmender Geschwindigkeit eine große Dämpfungsfähigkeit aufrecht erhält.

7. Anordnung nach einem der vorhergehenden Ansprüche, dadurch gekennzeichnet, daß die Volumenänderung im Anschluß oder unmittelbar außerhalb des Null-Kraft-Bereichs des Stoßdämpfers eintritt.

8. Anordnung nach einem der vorhergehenden Ansprüche, dadurch gekennzeichnet, daß das Verschieben des Arbeitsmediums zwischen der Ober- und Unterseite (1a bzw. 1b) des Kolbens im wesentlichen außerhalb des Zylinders über eine Rohrleitungs- und Einstellungs- und/oder Steuerungsanordnung erfolgt.

9. Anordnung nach einem der vorhergehenden Ansprüche, dadurch gekennzeichnet, daß die Rohrleitungs- und Einstellungs- und/oder Steuerungsanordnung aus zwei, zumindest im wesentlichen funktional symmetrischen Teilen besteht, die der Kompressions- bzw. Expansionsbewegung des Stoßdämpfers zugeordnet sind, und über besagte Anordnung ein Akkumulator mit dem Arbeitsraum des Zylinders auf eine Art und Weise verbunden ist, daß der Akkumulator bei der Kompressionsbewegung verdrängte Medien aufnimmt und beim Expansionshub die aufgenommenen verdrängten Medien zurückführt.

10. Anordnung nach einem der Ansprüche 1 bis 8, dadurch gekennzeichnet, daß die Rohrleitungs- und Einstellungs- und/oder Steuerungsanordnung vier, z. B. parallele Rohrleitungen umfaßt, von denen die ersten beiden der Kompressionsbewegung und die zweiten beiden der Expansionsbewegung zugeordnet sind, wobei eine Rohrleitung pro Paar zusätzlich mit Steuerventilen und eine Rohrleitung pro Paar zusätzlich mit Ablaßventilen und Einrichtungsflußanordnungen versehen ist, und eine Akkumulatoranordnung mit einer oder mehreren der Rohrleitungen verbunden ist.

## Revendications

1. Ensemble d'utilisation active d'une fonction d'hystérésis dans un amortisseur, cette fonction étant due à la compressibilité dans des milieux opérationnels de l'amortisseur ayant de préférence une faible compression, comme paramètre ou facteur de détermination de la variation de la force d'amortissement de l'amortisseur pendant des mouvements respectifs de compression et/ou d'allongement, dans le fluide opérationnel, exécutés par le piston (2) de l'amortisseur par rapport au cylindre (1) de l'amortisseur, de manière que la fonction d'hystérésis, pour une même vitesse relative entre le piston et le cylindre, donne différentes forces d'amortissement suivant que la vitesse augmente ou diminue, caractérisé en ce qu'un dispositif est destiné à influencer l'effet de la compressibilité du milieu et/ou du volume (volume de travail) du milieu et ainsi la fonction d'hystérésis, et en ce qu'un ou plusieurs ajustements-commutations ou commandes de la fonction d'hystérésis, réalisés sur ce dispositif ou par ce dispositif, provoquent des changements dirigés ou réglés des forces d'amortissement avec l'augmentation ou la réduction de vitesse à la vitesse respective considérée, produisant ainsi un changement des variations des forces d'amortissement qui donne un changement de la force d'amortissement, par exemple un effet de déplacement de force d'amortissement pendant le mouvement respectif de compression et/ou d'allongement.

2. Ensemble selon la revendication 1, caractérisé en ce qu'il présente un ajustement à deux positions de l'amplitude et de la forme d'hystérésis produites par deux soupapes (19, 20 et respectivement 25), de préférence des soupapes de commande, afin que, dans une première position d'influence destinée à déterminer une première amplitude et une première forme d'hystérésis, la fonction de la première soupape (19, 20) soit connectée et la fonction de la seconde soupape (25) soit déconnectée et, dans une seconde position d'influence, la fonction de la seconde soupape soit connectée et la fonction de la première soupape soit déconnectée, si bien que l'amortisseur travaille dans le premier cas cité avec une grande surface de piston, une faible pression et un faible volume de travail (comprimé) qui donne une petite fonction d'hystérésis-suspension (70), et, dans le dernier cas cité, l'amortisseur travaille avec une petite section de piston, une plus grande pression et un plus grand volume de travail qui donne une plus grande fonction d'hystérésis-suspension (71), et/ou les variations dirigées ou commandées du volume du fluide de travail et la mise sous pression assurent l'obtention de ressorts-longueurs de ressort voulus différents pour le piston-tige de piston et sont utilisées pour la production de différentes amplitudes et différentes formes d'hystérésis.

3. Ensemble selon la revendication 1 ou 2, caractérisé en ce que le volume et/ou l'effet de la compressibilité du milieu peuvent être sélectionnés afin qu'une pente voulue depuis la zone de zéro et directement après celle-ci soit présente dans la courbe obtenue pour la force d'amortissement.

4. Ensemble selon la revendication 1 ou 2, caractérisé en ce que le dispositif comprend un ou plusieurs éléments (26, 27, 28) qui augmentent ou réduisent le volume du milieu pour changer la longueur ou les longueurs élastiques du milieu, et en ce que l'ajustement ou la commande (i) provoque la connexion ou la déconnexion d'un ou plusieurs espaces (26, 27, 28 et respectivement 41, 42, 43) par rapport à l'espace normal de travail (la et/ou 1b) du piston dans le cylindre (1) et, parmi les espaces qui peuvent être connectés et déconnectés, des premiers espaces (26, 27, 28) peuvent être utilisés pour un ajustement fin et des seconds espaces (41, 42, 43) peuvent être utilisés pour un ajustement grossier de l'hystérésis.

5. Ensemble selon l'une quelconque des revendications précédentes, caractérisé en ce que l'ajustement ou la commande provoque un changement d'élasticité d'un ou plusieurs espaces de milieu (1a, 1b, 26, 27, 28 et respectivement 41, 42, 43).

6. Ensemble selon l'une quelconque des revendications précédentes, caractérisé en ce que la connexion simultanée des deux soupapes, de préférence les soupapes de commande (19, 20 et respectivement 25), donne une troisième amplitude et une troisième forme d'hystérésis qui donnent une accumulation élevée de force dans la zone de zéro de déplacement de l'amortisseur et qui garde des possibilités élevées d'amortissement à des vitesses décroissantes.

7. Ensemble selon l'une quelconque des revendications précédentes, caractérisé en ce que le changement de volume se produit après et juste en dehors de la zone de force nulle de l'amortisseur.

8. Ensemble selon l'une quelconque des revendications précédentes, caractérisé en ce que le déplacement du milieu de travail entre les côtés supérieur et inférieur (la et respectivement 1b) du piston est tel qu'il se produit essentiellement en dehors du cylindre par l'intermédiaire d'une partie de conduit et d'un ensemble d'ajustement et/ou commande.

9. Ensemble selon l'une quelconque des revendications précédentes, caractérisé en ce que la partie de conduit et l'ensemble d'ajustement et/ou commande comprennent deux parties qui sont au moins essentiellement symétriques au point de vue fonctionnel et qui sont affectées respectivement aux mouvements de compression et d'allongement de l'amortisseur et, par l'intermédiaire de cet ensemble, un accumulateur est connecté à l'espace de travail du cylindre de manière que, lors du mouvement respectif de compression, l'accumulateur reçoive les milieux déplacés et, lors de la course respective d'allongement, renvoie les fluides déplacés reçus.

10. Ensemble selon l'une des revendications 1 à 8, caractérisé en ce que la partie de conduit et l'ensemble d'ajustement et/ou de commande comportent quatre conduits, par exemple des conduits parallèles, dont deux premiers conduits sont affectés au mouvement de compression et deux seconds conduits sont affectés au mouvement d'allongement, en plus desquels un conduit d'une paire respective comprend des soupapes de commande et un conduit d'une paire respective comprend des soupapes de purge et des ensembles à circulation unidirectionnelle, et en ce qu'un ensemble accumulateur est connecté à une ou plusieurs des parties de conduit.
